# FASCICULE DE BREVET EUROPEEN

(11) **EP 3 530 926 B1**
(45) Date de publication et mention de la délivrance du brevet: **23.12.2020**
(21) Numéro de dépôt: 19154138.2
(22) Date de dépôt: 29.01.2019
(51) Int. Cl.: F02K 1/72, F02K 1/76

(54) **NACELLE D'UN TURBOREACTEUR COMPORTANT UN VOLET INVERSEUR**
MASCHINENGONDEL EINES STRAHLTRIEBWERKS, DIE EINE SCHUBUMKEHRKLAPPE UMFASST
TURBOJET NACELLE COMPRISING AN INVERTER FLAP

(30) Priorité: 22.02.2018 FR 1851529
(43) Date de publication de la demande: 28.08.2019
(73) Titulaire: Airbus Operations S.A.S., 31060 Toulouse (FR)
(72) Inventeur: SAUVALLE, Thomas, 31000 TOULOUSE (FR)
(74) Mandataire: Gicquel, Olivier Yves Gérard

(56) Documents cités:
- FR-A1- 2 986 212
- GB-A- 1 303 875
- US-A1- 2001 010 148

## Description

La présente invention concerne une nacelle d'un turboréacteur double flux qui comporte au moins un volet inverseur, un turboréacteur double flux comportant une telle nacelle et un moteur, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur, une nacelle qui est fixée autour du moteur et une veine secondaire qui est entre le moteur et la nacelle et qui permet le passage d'un flux secondaire.

La nacelle comporte au moins un volet inverseur qui est mobile entre une position escamotée dans laquelle il est positionné en dehors de la veine secondaire de manière à ne pas faire obstacle au flux secondaire, et une position active dans laquelle il est positionné en travers de la veine secondaire de manière à faire obstacle au flux secondaire pour le diriger radialement à l'extérieur de la nacelle à travers une fenêtre prévue à cet effet.

Classiquement le volet inverseur est monté mobile en rotation sur la structure de la nacelle et un mécanisme vient le déplacer de la position escamotée à la position active et inversement.

Le document FR2986212 divulgue une nacelle pour un turboréacteur double flux selon l'art antérieur.

Bien que le mécanisme d'un tel volet inverseur donne entière satisfaction, il est souhaitable de trouver des mécanismes différents.

Un objet de la présente invention est de proposer une nacelle comportant au moins un volet inverseur avec un mécanisme d'ouverture différent.

A cet effet, est proposée une nacelle pour un turboréacteur double flux telle que revendiquée dans la revendication 1.

Le mécanisme du volet inverseur revendiqué dans la revendication 1 permet un déplacement du capot mobile qui est plus grand que la longueur du volet inverseur permettant ainsi un agrandissement de la longueur de la fenêtre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue de côté d'un aéronef comportant une nacelle selon l'invention,
la Fig. 2 est une vue en perspective d'un détail du mécanisme d'entraînement permettant le déplacement du volet inverseur, et
les Figs. 3 à 6 sont des représentations schématiques en vue de côté de la nacelle selon l'invention dans différentes positions du volet inverseur et du capot mobile.

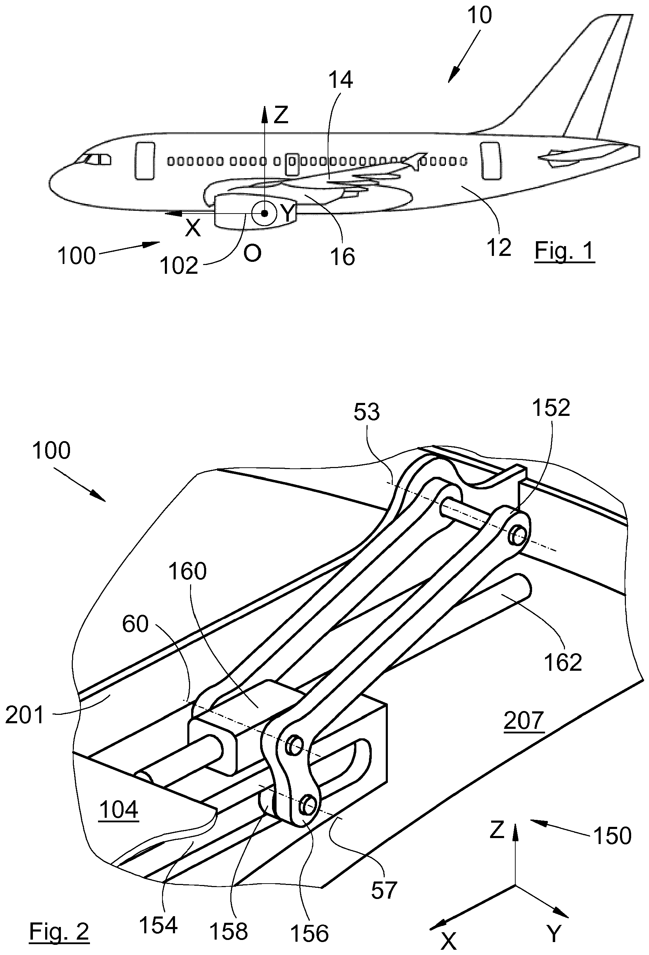

Dans la description qui suit, les termes relatifs à une position sont pris en référence à un aéronef en position d'avancement comme il est représenté sur la Fig. 1.

La Fig. 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles.

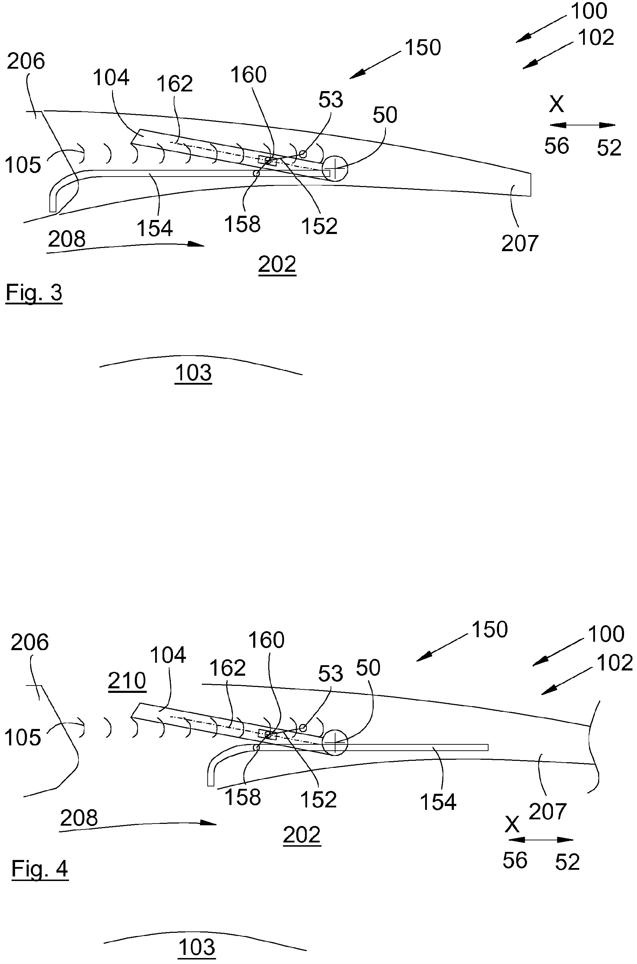

Les Figs. 3 à 6 montrent le turboréacteur double flux 100 qui comporte une nacelle 102 et un moteur 103 qui est logé à l'intérieur de la nacelle 102. Le turboréacteur double flux 100 présente une veine 202 entre la nacelle 102 et le moteur 103 dans laquelle circule le flux secondaire 208.

La nacelle 102 comporte au moins un volet inverseur 104. En particulier, il peut y avoir deux volets inverseurs 104 disposés l'un en face de l'autre, ou quatre volets inverseurs 104 répartis régulièrement sur la périphérie de la nacelle 102. Chaque volet inverseur 104 permet selon sa position d'inverser la poussée du turboréacteur double flux 100.

Dans la description qui suit, l'invention est plus particulièrement décrite pour un volet inverseur 104, mais elle s'applique de la même manière pour chaque volet inverseur 104 lorsqu'il y en a plusieurs.

La nacelle 102 présente pour chaque volet inverseur 104, une fenêtre 210 ouverte entre la veine 202 et l'extérieur de la nacelle 102. Dans le mode de réalisation de l'invention présenté sur les Figs. 3 à 6, des cascades 105 sont disposées en travers de la fenêtre 210 pour orienter au mieux le flux secondaire 208.

La nacelle 102 présente un capot fixe 206 qui délimite la fenêtre 210 en amont par rapport à l'axe longitudinal X et qui est monté fixe sur une structure fixe 201 de la nacelle 102.

La nacelle 102 présente un capot mobile 207 qui délimite la fenêtre 210 en aval par rapport à l'axe longitudinal X. Le capot mobile 207 est monté mobile en translation selon une direction de translation globalement parallèle à l'axe longitudinal X sur la structure fixe 201. La translation est réalisée par tous moyens appropriés comme par exemple des glissières.

Le capot fixe 206 et le capot mobile 207 présentent chacun une surface extérieure qui constitue l'enveloppe extérieure de la nacelle 102 et une surface intérieure qui constitue une paroi extérieure de la veine 202.

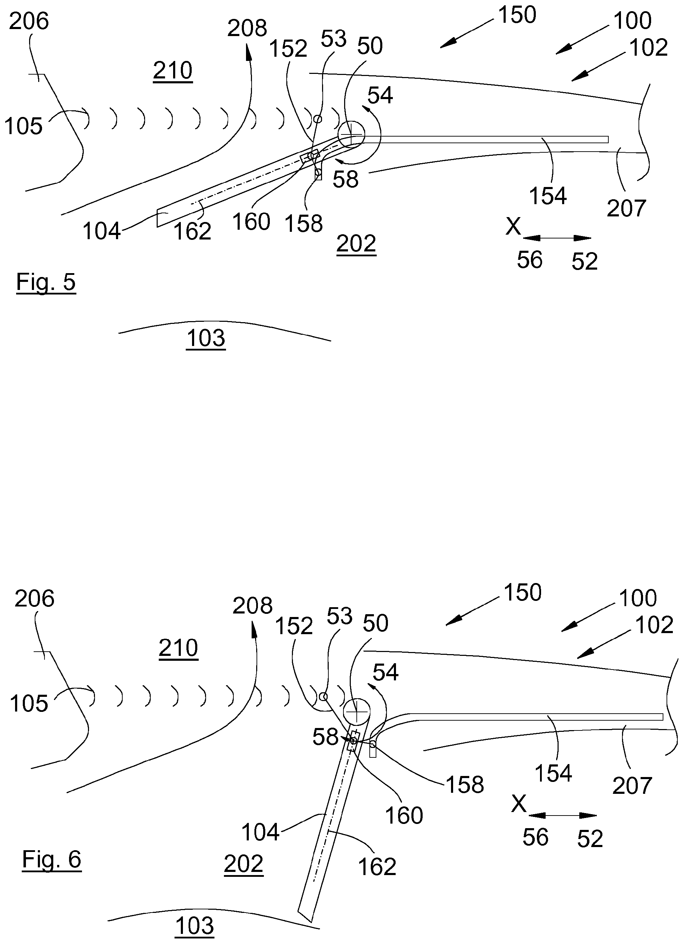

Le capot mobile 207 est mobile entre une position de fermeture (Fig. 3) dans laquelle il est rapproché du capot fixe 206 et une position d'ouverture dans laquelle il est éloigné du capot fixe 206 vers l'arrière de manière à élargir la fenêtre 210. Les Figs. 4 et 5 montrent des positions intermédiaires entre la position de fermeture et la position d'ouverture et la Fig. 6 montre la position d'ouverture.

La nacelle 102 comporte également des moyens moteur pour déplacer le capot mobile 207 de la position de fermeture à la position d'ouverture et inversement, et ils peuvent comporter à cet effet, par exemple des vérins, vis à bille, des moteurs ou tout autre moyen approprié pour déplacer un élément en translation.

Les moyens moteur sont commandés par une unité de contrôle, du type processeur, qui commande par exemple l'allongement et le raccourcissement des vérins selon les besoins de l'aéronef 10.

Le volet inverseur 104 est monté mobile en rotation autour d'un axe de rotation 50 sur la structure fixe 201 entre une position escamotée (Figs. 3 et 4) et une position active pour laquelle l'inversion de poussée a une efficacité maximale. La Fig. 5 montre une position intermédiaire entre la position escamotée et la position active. La Fig. 6 montre la position active. Dans le mode de réalisation de l'invention présenté sur les Figs. 2 à 6, l'axe de rotation 50 est ici perpendiculaire à l'axe longitudinal X.

En position escamotée, le volet inverseur 104 se positionne à l'intérieur du capot mobile 207 qui est en position de fermeture. En position d'ouverture, le capot mobile 207 est déplacé vers l'arrière pour faciliter la manœuvre du volet inverseur 104 qui passe de la position escamotée à la position active.

Lorsque le volet inverseur 104 est en position active, le volet inverseur 104 vient en travers de la veine 202 et dévie au moins une partie du flux secondaire 208 vers l'extérieur à travers la fenêtre 210.

Le passage de la position fermée à la position ouverte du volet inverseur 104 est coordonné mais différé par rapport au passage de la position de fermeture à la position d'ouverture du capot mobile 207 et inversement.

Lors du passage de la position escamotée à la position active, la rotation du volet inverseur 104 commence lorsque le capot mobile 207 passe par une position intermédiaire spécifique entre la position de fermeture et la position d'ouverture. A l'inverse, lors du passage de la position active à la position escamotée, la rotation du volet inverseur 104 s'arrête lorsque le capot mobile 207 passe par la position intermédiaire spécifique en revenant de la position d'ouverture vers la position de fermeture.

Cette coordination et ce décalage sont assurés par un mécanisme d'entraînement 150 qui réalise, à partir de la position escamotée et de la position de fermeture, une première combinaison assurant :
- une translation vers l'arrière (flèche 52) du capot mobile 207 selon une direction de translation globalement parallèle à l'axe longitudinal X qui assure le déplacement du capot mobile 207 de la position de fermeture vers la position d'ouverture en passant par la position intermédiaire spécifique,
- à partir du moment où le capot mobile 207 passe par la position intermédiaire spécifique, une rotation (flèche 54) du volet inverseur 104 autour de l'axe de rotation 50 qui assure le déplacement du volet inverseur 104 de la position escamotée à la position active tout en poursuivant le déplacement du capot mobile 207 jusqu'à la position d'ouverture.

Comme cela est expliqué, la translation vers l'arrière du capot mobile 207 se poursuit durant la rotation du volet inverseur 104.

A l'inverse, le passage de la position active à la position escamotée du volet inverseur 104 est assuré par le même mécanisme d'entraînement 150 qui est également prévu pour réaliser une deuxième combinaison assurant à partir de la position active et de la position d'ouverture :
- une translation vers l'avant (flèche 56) du capot mobile 207 selon la direction de translation qui assure le déplacement du capot mobile 207 de la position d'ouverture vers la position de fermeture en passant par la position intermédiaire spécifique, et
- jusqu'au moment où le capot mobile 207 passe par la position intermédiaire spécifique, une rotation (flèche 58) en sens inverse du volet inverseur 104 autour de l'axe de rotation 50 qui assure le retour du volet inverseur 104 de la position active à la position escamotée, tout en poursuivant le déplacement du capot mobile 207 vers la position de fermeture, puis
lorsque le volet inverseur 104 est en position escamotée, le déplacement du capot mobile 207 se poursuit jusqu'à la position de fermeture.

Comme cela est expliqué, la translation vers l'avant du capot mobile 207 débute en même temps que la rotation du volet inverseur 104, puis la rotation du volet inverseur 104 s'arrête tandis que la translation du capot mobile 207 se poursuit.

La Fig. 2 montre un détail du mécanisme d'entraînement 150.

Le mécanisme d'entraînement 150 comporte :
- deux bielles 152 qui sont parallèles entre elles, et où chacune comporte une extrémité proximale montée mobile en rotation sur la structure fixe 201 autour d'un axe de bielle 53 parallèle à l'axe de rotation 50 et à distance de celui-ci, et une extrémité distale 156 portant une roue 158 montée mobile en rotation autour d'un axe de roue 57 parallèle à l'axe de rotation 50 et à distance de celui-ci,
- pour chaque roue 158, une rainure 154 solidaire du capot mobile 207 et comportant une partie rectiligne et une partie arquée, la partie rectiligne étant parallèle à la direction de translation et s'étendant à l'arrière de la partie arquée, où la roue 158 coulisse dans ladite rainure 154,
- un guide 162 solidaire du volet inverseur 104 ici au niveau de son extrémité avant, et
- un coulisseau 160 étant, d'une part, monté mobile en rotation entre les deux bielles 152 autour d'un axe de coulisseau 60 parallèle à l'axe de rotation 50, et, d'autre part, monté coulissant le long du guide 162.

En position de fermeture/escamotée, la roue 158 est dans la partie rectiligne.

Le fonctionnement est alors celui-ci à partir de la position de fermeture/escamotée :
- l'unité de contrôle commande les moyens moteur pour déplacer le capot mobile 207 de la position de fermeture vers la position d'ouverture,
- le déplacement vers l'arrière (flèche 52) du capot mobile 207 entraîne le déplacement des rainures 154 vers l'arrière et tant que les roues 158 sont dans les parties rectilignes, les bielles 152 restent immobiles et le volet inverseur 104 ne bouge pas,
- lorsque les parties arquées atteignent les roues 158, les extrémités distales 156 sont tirées vers l'intérieur de la nacelle 102 et les bielles 152 pivotent autour de l'axe de bielle 53 dans le sens de rotation 54,
- dans le même temps, le coulisseau 160 bascule avec les bielles 152 et il entraîne à son tour le guide 162 et le volet inverseur 104 en rotation autour de l'axe de rotation 50 pour passer de la position escamotée à la position active.

En position d'ouverture/active, la roue 158 est dans la partie arquée.

A l'inverse, à partir de la position d'ouverture/active, le fonctionnement est alors celui-ci :
- l'unité de contrôle commande les moyens moteur pour déplacer le capot mobile 207 de la position d'ouverture vers la position de fermeture,
- le déplacement vers l'avant (flèche 56) du capot mobile 207 entraîne le déplacement des rainures 154 vers l'avant et comme les roues 158 sont dans les parties arquées, les extrémités distales 156 se déplacent en conséquence, ce qui entraîne la rotation des bielles 152 autour de l'axe de bielle 53 dans le sens de rotation 58 et dans le même temps le coulisseau 160 bascule avec les bielles 152 et il entraîne à son tour le guide 162 et le volet inverseur 104 en rotation autour de l'axe de rotation 50 pour passer de la position active à la position escamotée,
- lorsque les parties rectilignes atteignent les roues 158, les extrémités distales 156 et les bielles 152 restent immobiles et le volet inverseur 104 ne bouge pas, jusqu'à ce que le capot mobile 207 atteigne sa position de fermeture.

Un tel mécanisme d'entraînement 150 permet de gérer un déplacement du capot mobile 207 plus grand que la longueur du volet inverseur 104.

Lors du mouvement pour atteindre la position d'ouverture/active, les roues 158 se déplacent dans la rainure 154 mais pas toujours dans le même sens. En particulier, à la fin du mouvement, les roues 158 ont tendance à remonter dans les parties arquées après être descendues. Inversement, au début du mouvement pour atteindre la position de fermeture/escamotée, les roues 158 ont tendance à descendre dans les parties arquées avant de remonter.

Dans le mode de réalisation de l'invention présenté ici, l'axe de rotation 50 est en arrière par rapport à l'axe de bielle 53 qui est lui-même en arrière par rapport à l'axe de coulisseau 60 en position de fermeture/escamotée.

Le coulisseau 160 se déplace globalement dans un plan radial de la nacelle 102 contenant l'axe longitudinal X, comme par exemple le plan XZ sur la Fig. 2.

La partie arquée présente une courbure qui part de la partie rectiligne vers l'intérieur de la nacelle 102 en progressant de l'arrière vers l'avant.

Dans le mode de réalisation de l'invention présenté sur les Figs. 2 à 6, chaque bielle 152 prend la forme d'un L et l'axe de coulisseau 60 est agencé au coin du L, c'est-à-dire entre l'extrémité distale et l'extrémité proximale.

Dans le mode de réalisation de l'invention présenté ici, le guide 162 est une tige qui est rectiligne et le coulisseau 160 est traversé d'un alésage dans lequel s'emmanche la tige, mais il est possible de prévoir un autre mode de réalisation, comme par exemple un montage en queue d'aronde.

## Revendications

1. Nacelle (102) pour un turboréacteur double flux (100), ladite nacelle (102) comportant :
- une structure fixe (201),
- un capot fixe (206) monté fixe sur la structure fixe (201) et un capot mobile (207) mobile en translation par rapport à la structure fixe (201) selon une direction de translation entre une position de fermeture dans laquelle il est rapproché du capot fixe (206) et une position d'ouverture dans laquelle il est éloigné du capot fixe (206) vers l'arrière,
- des moyens moteur destinés à déplacer le capot mobile (207) de la position de fermeture à la position d'ouverture et inversement,
- une fenêtre (210) délimitée en amont par le capot fixe (206) et en aval par le capot mobile (207), ladite fenêtre (210) étant ouverte entre une veine (202) d'un flux secondaire (208) et l'extérieur de la nacelle (102),
- un volet inverseur (104) monté mobile en rotation autour d'un axe de rotation (50) entre une position escamotée dans laquelle il se positionne à l'intérieur du capot mobile (207) et une position active dans laquelle il vient en travers de la veine (202), et
- un mécanisme d'entraînement (150) prévu pour coordonner et différer le passage de la position escamotée à la position active du volet inverseur (104) avec le passage de la position de fermeture à la position d'ouverture du capot mobile (207) et inversement, ledit mécanisme d'entraînement (150) comportant :
- deux bielles (152) où chacune comporte une extrémité proximale montée mobile en rotation sur la structure fixe (201) autour d'un axe de bielle (53) parallèle à l'axe de rotation (50) et une extrémité distale (156) portant une roue (158) montée mobile en rotation autour d'un axe de roue (57) parallèle à l'axe de rotation (50),
- pour chaque roue (158), une rainure (154) solidaire du capot mobile (207) et comportant une partie rectiligne et une partie arquée, la partie rectiligne étant parallèle à la direction de translation et s'étendant à l'arrière de la partie arquée, où la roue (158) coulisse dans ladite rainure (154),
- un guide (162) solidaire du volet inverseur (104), et
- un coulisseau (160) étant, d'une part, monté mobile en rotation entre les deux bielles (152) autour d'un axe de coulisseau (60) parallèle à l'axe de rotation (50), et, d'autre part, monté coulissant le long du guide (162).

2. Nacelle (102) selon la revendication 1, **caractérisée en ce que** la partie arquée présente une courbure qui part de la partie rectiligne vers l'intérieur de la nacelle (102) en progressant de l'arrière vers l'avant.

3. Nacelle (102) selon l'une des revendications précédentes, **caractérisée en ce que** chaque bielle (152) prend la forme d'un L et **en ce que** l'axe de coulisseau (60) est agencé au coin du L.

4. Nacelle (102) selon l'une des revendications précédentes, **caractérisée en ce que** le guide (162) est une tige et **en ce que** le coulisseau (160) est traversé d'un alésage dans lequel s'emmanche la tige.

5. Turboréacteur double flux (100) comportant un moteur (103) et une nacelle (102) selon l'une des revendications précédentes entourant le moteur (103), et où une veine (202) d'un flux secondaire (208) est délimitée entre la nacelle (102) et le moteur (103).

6. Aéronef (10) comportant au moins un turboréacteur double flux (100) selon la revendication 5.

## Patentansprüche

1. Gondel (102) für ein Zweistrom-Turbostrahltriebwerk (100), wobei die Gondel (102) aufweist:
- eine ortsfeste Struktur (201),
- eine ortsfeste Haube (206), die fest an der ortsfesten Struktur (201) angebracht ist, und eine bewegliche Haube (207), die in Bezug auf die feste Struktur (201) in einer Translationsrichtung zwischen einer Schließstellung, in welcher sie der ortsfesten Haube (206) angenähert ist, und einer Öffnungsstellung, in welcher sie nach hinten von der ortsfesten Haube (206) entfernt ist, translatorisch beweglich ist,
- Antriebsmittel, die dazu bestimmt sind, die bewegliche Haube (207) von der Schließstellung in die Öffnungsstellung und umgekehrt zu verschieben,
- ein Fenster (210), das stromaufwärts von der ortsfesten Haube (206) und stromabwärts von der beweglichen Haube (207) begrenzt wird, wobei das Fenster (210) zwischen einem Strömungskanal (202) eines Sekundärstroms (208) und der Außenseite der Gondel (102) offen ist,
- eine Schubumkehrklappe (104), die um eine Drehachse (50) drehbeweglich zwischen einer eingezogenen Stellung, in welcher sie sich im Inneren der beweglichen Haube (207) positioniert, und einer aktiven Stellung, in welcher sie sich quer zu dem Strömungskanal (202) stellt, angebracht ist,
- einen Antriebsmechanismus (150), der dafür vorgesehen ist, den Übergang der Schubumkehrklappe (104) von der eingezogenen Stellung in die aktive Stellung mit dem Übergang der beweglichen Haube (207) von der Schließstellung in die Öffnungsstellung und umgekehrt zu koordinieren und zeitversetzt durchzuführen, wobei der Antriebsmechanismus (150) aufweist:
- zwei Schubstangen (152), wobei jede ein proximales Ende aufweist, das an der ortsfesten Struktur (201) drehbeweglich um eine zu der Drehachse (50) parallele Schubstangenachse (53) angebracht ist, und ein distales Ende (156), das ein Rad (158) trägt, welches drehbeweglich um eine zu der Drehachse (50) parallele Radachse (57) angebracht ist,
- für jedes Rad (158) eine Nut (154), die mit der beweglichen Haube (207) fest verbunden ist und einen geradlinigen Teil und einen bogenförmigen Teil aufweist, wobei der geradlinige Teil parallel zu der Translationsrichtung ist und sich hinter dem bogenförmigen Teil erstreckt, wobei das Rad (158) in der Nut (154) gleitet,
- eine Führung (162), die mit der Schubumkehrklappe (104) fest verbunden ist, und
- einen Schieber (160), der einerseits zwischen den zwei Schubstangen (152) drehbeweglich um eine zu der Drehachse (50) parallele Schieberachse (60) angebracht ist und andererseits gleitend entlang der Führung (162) angebracht ist.

2. Gondel (102) nach Anspruch 1, **dadurch gekennzeichnet, dass** der bogenförmige Teil eine Krümmung, welche von dem geradlinigen Teil ausgeht, zum Inneren der Gondel (102) hin aufweist, wobei sie von hinten nach vorn zunimmt.

3. Gondel (102) nach einem der vorhergehenden Ansprüche, **dadurch gekennzeichnet, dass** jede Schubstange (152) die Form eines "L" aufweist, und dadurch, dass die Schieberachse (60) an der Ecke des "L" angeordnet ist.

4. Gondel (102) nach einem der vorhergehenden Ansprüche, **dadurch gekennzeichnet, dass** die Führung (162) eine Stange ist, und dadurch, dass der Schieber (160) von einer Bohrung durchquert wird, in welche die Stange eingeschoben ist.

5. Zweistrom-Turbostrahltriebwerk (100), welches einen Motor (103) und eine Gondel (102) nach einem der vorhergehenden Ansprüche, die den Motor (103) umgibt, aufweist, und wobei ein Strömungskanal (202) eines Sekundärstroms (208) zwischen der Gondel (102) und dem Motor (103) begrenzt wird.

6. Luftfahrzeug (10), welches wenigstens ein Zweistrom-Turbostrahltriebwerk (100) nach Anspruch 5 aufweist.

## Claims

1. Nacelle (102) for a turbofan engine (100), said nacelle (102) comprising:
- a fixed structure (201),
- a fixed cowl (206) mounted fixedly on the fixed structure (201) and a mobile cowl (207) that is able to move in translation with respect to the fixed structure (201) in a direction of translation between a closure position in which it is moved close to the fixed cowl (206) and an opening position in which it is moved away from the fixed cowl (206) to the rear,
- motive means that are intended to move the mobile cowl (207) from the closure position to the opening position and vice versa,
- a window (210) that is delimited in the upstream direction by the fixed cowl (206) and in the downstream direction by the mobile cowl (207), said window (210) being open between a duct (202) for a secondary flow (208) and the outside of the nacelle (102),
- a reverser flap (104) mounted so as to be able to move in rotation about an axis of rotation (50) between a stowed position in which it is positioned inside the mobile cowl (207) and an active position in which it is moved across the duct (202), and
- a drive mechanism (150) that is intended to coordinate and defer the movement of the reverser flap (104) from the stowed position to the active position with the movement of the mobile cowl (207) from the closure position to the opening position, and vice versa, said drive mechanism (150) comprising:
- two connecting rods (152), each one comprising a proximal end mounted so as to be able to move in rotation on the fixed structure (201) about a connecting rod axis (53) parallel to the axis of rotation (50) and a distal end (156) bearing a wheel (158) which is mounted so as to be able to move in rotation about a wheel axis (57) that is parallel to the axis of rotation (50),
- for each wheel (158), a groove (154) that is as one with the mobile cowl (207) and comprises a straight portion and an arcuate portion, the straight portion being parallel to the direction of translation and extending to the rear of the arcuate portion, where the wheel (158) runs in said groove (154),
- a guide (162) is as one with the reverser flap (104), and
- a slider (160) being, on one hand, mounted so as to be able to move in rotation between the two connecting rods (152) about a slider axis (60) parallel to the axis of rotation (50), and, on the other hand, mounted so as to be able to slide along the guide (162).

2. Nacelle (102) according to Claim 1, **characterized in that** the arcuate portion has a curvature which departs from the straight portion towards the inside of the nacelle (102), progressing from the rear to the front.

3. Nacelle (102) according to either of the preceding claims, **characterized in that** each connecting rod (152) is L-shaped, and **in that** the slider axis (60) is arranged at the corner of the L.

4. Nacelle (102) according to one of the preceding claims, **characterized in that** the guide (162) is a stem and **in that** the slider (160) has passing through it a bore into which the stem is fitted.

5. Turbofan engine (100) comprising a motor (103) and, surrounding the motor (103), a nacelle (102) according to one of the preceding claims, and in which a duct (202) for a secondary flow (208) is delimited between the nacelle (102) and the motor (103).

6. Aircraft (10) comprising at least one turbofan engine (100) according to Claim 5.
